# EUROPÄISCHE PATENTSCHRIFT

(11) **EP 1 137 509 B1**
(45) Veröffentlichungstag und Bekanntmachung des Hinweises auf die Patenterteilung: **23.04.2003**
(21) Anmeldenummer: 99964408.1
(22) Anmeldetag: 06.12.1999
(51) Int. Cl.: B23Q 1/01

(54) **WERKZEUGMASCHINE MIT HORIZONTALER ARBEITSSPINDEL**
MACHINE TOOL WITH A HORIZONTAL WORK SPINDLE
MACHINE-OUTIL A ARBRE MOTEUR HORIZONTAL

(30) Priorität: 09.12.1998 DE 19857013
(43) Veröffentlichungstag der Anmeldung: 04.10.2001
(73) Patentinhaber: Schwäbische Werkzeugmaschinen GmbH, 78713 Schramberg-Waldmössingen (DE)
(72) Erfinder: KROLL, Dieter, D-35466 Rabenau (DE); ARMLEDER, Wolfgang, D-78628 Rottweil (DE)
(74) Vertreter: KOHLER SCHMID + PARTNER
(86) Internationale Anmeldenummer: DE9903892
(87) Internationale Veröffentlichungsnummer: WO00034004

(56) Entgegenhaltungen:
- DE-A- 19 645 324
- US-A- 3 817 650
- US-A- 5 183 374

## Beschreibung

Die Erfindung betrifft eine Werkzeugmaschine zur insbesondere spanenden Bearbeitung von Werkstücken, mit einem Maschinengestell, einem am Maschinengestell gelagerten Werkstücktisch und einer horizontal angeordneten Bearbeitungseinheit, die mit ihrer unteren Seite am Maschinengestell befestigt ist.

Eine derartige Werkzeugmaschine ist beispielsweise durch die De 196 45 324 A bekannt geworden.

Die DE 196 45 324 A offenbart eine Werkzeugmaschine, bei der die Bearbeitungseinheit an ihrer oberen Seite einen den Werkstücktisch übergreifenden Träger aufweist, welcher am Maschingestell verschiebbar geführt ist. Zwar können durch diesen Träger Verlagerungen zwischen Werkstückseite und Werkzeugseite verhindert werden, aber der Träger bedeutet, da er mit der Bearbeitungseinheit mitbewegt werden muß, ein zusätzliches mitzubewegendes Gewicht, das bei der Bearbeitung beschleunigt und abgebremst werden muß.

Weiterhin bekannt sind Rundtisch-Werkzeugmaschinen, um deren drehbar gelagerten Rundtisch herum mehrere Bearbeitungseinheiten mit horizontalen Arbeitsspindeln (Z-Richtung) angeordnet sind, mit denen ein auf dem Rundtisch vorgesehenes Werkstück bearbeitet werden kann. Die Bearbeitungseinheiten sind jeweils seitlich am Untergestell des Rundtisches befestigt. Auch bei Werkzeugmaschinen von Transferstraßen sind die Bearbeitungseinheiten jeweils seitlich am Untergestell der Werkzeugmaschine befestigt.

Bei bestimmten Anwendungen, z.B. bei Hochgeschwindigkeitsoder Hochpräzisionsbearbeitungen oder bei Schwerzerspanung, können aufgrund der zwischen Werkstückseite und Werkzeugseite wirkenden hohen Beschleunigungs- und Bearbeitungskräfte zwischen Werkstück und Werkzeug insbesondere in Z-Richtung Verlagerungen auftreten, so daß die gewünschte Präzision nicht erreicht werden kann. Solche Kräfte treten insbesondere dann auf, wenn Werkstück und Bearbeitungseinheit in dieser Richtung relativ zueinander bewegbar sind.

Es ist daher Aufgabe der Erfindung, eine Werkzeugmaschine zu schaffen, die bei einfachem Aufbau ebenfalls Verlagerungen zwischen Werkstückseite und Werkzeugseite verhindert.

Diese Aufgabe wird erfindungsgemäß überraschend einfach dadurch gelöst, daß die Bearbeitungseinheit mit ihrer oberen Seite an einem den Werkstücktisch übergreifenden Träger des Maschinengestells befestigt ist.

Dieser Rahmen kann als ein einstückiges Gußteil gefertigt sein oder aus mehreren miteinander verbundenen, insbesondere verschweißten Einzelteilen zusammengesetzt sein. Die erfindungsgemäße Werkzeugmaschine kann ein- oder mehrspindlig ausgebildet sein.

Bei bevorzugten Ausführungen der Erfindung übergreift der Träger den Werkstücktisch von der der Bearbeitungseinheit gegenüberliegenden Seite. Es ist aber auch möglich, daß der Träger von einer anderen Seite den Werkstücktisch bzw. die Bearbeitungseinheit übergreift.

In einer weiteren vorteilhaften Ausführungsform ist die Bearbeitungseinheit am Maschinengestell in mindestens einer Führung verschiebbar geführt, welche am Träger befestigt ist. In dieser mindestens einen Führung kann z.B. ein Schlitten einer Schlitteneinheit geführt sein, mittels der eine Arbeitsspindel in X-, Y- und Z-Richtung verfahren wird.

Vorzugsweise verläuft die mindestens eine Führung am Träger etwa horizontal, um einen X-Schlitten der Bearbeitungseinheit zu führen. Diese am Träger befestigte horizontale Führung bildet dann die obere Befestigung der Bearbeitungseinheit am Maschinengestell.

Bei einer besonders bevorzugten Ausführung der Erfindung ist der Träger auf der Seite der Bearbeitungseinheit am Maschinengestell abgestützt. Dazu können z.B. mindestens eine, vorzugsweise aber zwei, seitlich eines Bearbeitungsfensters der Bearbeitungseinheit vorgesehene Stützen am Maschinengestell vorgesehen sein. An der Stütze kann dann die mindestens eine, etwa vertikal verlaufende Führung vorgesehen sein, um einen Y-Schlitten der Bearbeitungseinheit zu führen. Diese vertikale Führung bildet dann die obere Befestigung der Bearbeitungseinheit am Maschinengestell.

Bei bevorzugten Ausführungsformen der Werkzeugmaschine ist der Werkstücktisch drehbar um einen über den Werkstücktisch hochstehenden Mittelträger des Maschinengestells herum gelagert, wobei der den Werkstücktisch radial übergreifende Träger an diesem Mittelträger befestigt ist. Bei einer solchen Rundtisch-Werkzeugmaschine werden dann die oben auf die Bearbeitungseinheit insbesondere in Z-Richtung wirkenden Kräfte über den übergreifenden Träger und den Mittelträger in das Maschinengestell geleitet.

In vorteilhafter Weiterbildung dieser Rundtisch-Werkzeugmaschine ist der Werkstücktisch jeweils über ein unterhalb und oberhalb des zu bearbeitenden Werkstücks vorgesehenes Drehlager am Mittelträger befestigt. Indem die auf das Werkstück bzw. auf den Werkstücktisch wirkenden Kräfte ober- und unterhalb der Bearbeitungsebene in den Mittelträger eingeleitet werden, werden auch die auf den Rundtisch oberhalb seines unteren Drehlagers wirkenden Kräfte vom Maschinengestell aufgenommen.

In einer anderen Weiterbildung der Rundtisch-Werkzeugmaschine sind für mehrere Bearbeitungseinheiten an dem hochstehenden Mittelträger mehrere in dessen Umfangsrichtung versetzt angeordnete, den Werkstücktisch jeweils übergreifende Träger angeordnet. Diese können insbesondere zu einem einzigen mehrarmigen Träger zusammengefaßt sein.

Bei anderen bevorzugten Ausführungsformen der erfindungsgemäßen Werkzeugmaschine ist am Träger auf gegenüberliegenden Seiten jeweils eine Bearbeitungseinheit vorgesehen. Bei einer solchen Werkzeugmaschine, die insbesondere als Werkzeugmaschine einer Transferstraße eingesetzt werden kann, werden dann die jeweils oben auf die beiden Bearbeitungseinheiten in Z-Richtung wirkenden Kräfte über den gleichen übergreifenden Träger in das Maschinengestell geleitet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so daß die wesentlichen Merkmale der Erfindung gut zu erkennen sind. Die Darstellungen sind nicht notwendigerweise maßstäblich zu verstehen.

Es zeigt:
- Fig. 1: eine Transferstraße mit zwei erfindungsgemäßen Werkzeugmaschinen in perspektivischer Ansicht ohne Werkstücktisch und Bearbeitungseinheiten;
- Fig. 2: die vordere der in Fig. 1 gezeigten Werkzeugmaschinen mit Werkstücktisch und einer seitlich angeordneten horizontalen Bearbeitungseinheit in einem Längsschnitt;
- Fig. 3: in einer der Fig. 2 entsprechenden Ansicht eine erfindungsgemäße Werkzeugmaschine mit zwei seitlich gegenüberliegend angeordneten horizontalen Bearbeitungseinheiten;
- Fig. 4: eine erfindungsgemäße Rundtisch-Werkzeugmaschine mit mehreren seitlich um den Werkstücktisch herum angeordneten horizontalen Bearbeitungseinheiten in einer Ansicht von oben; und
- Fig. 5: die Werkzeugmaschine der Fig. 4 im Bereich einer horizontalen Bearbeitungseinheit in einem Längsschnitt.

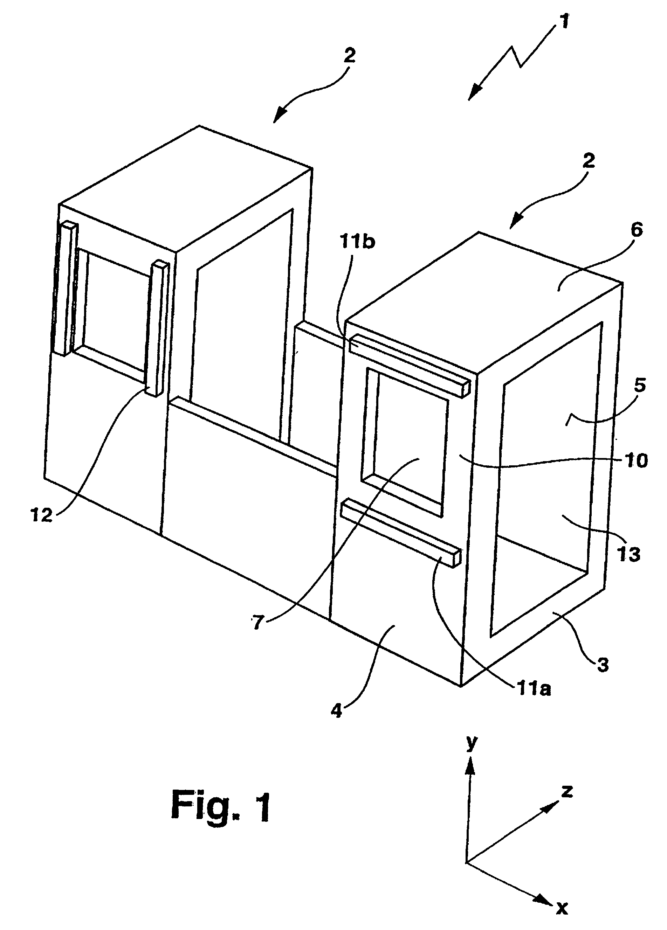

In Fig. 1 ist eine Transferstraße 1 mit zwei Werkzeugmaschinen 2 dargestellt. Die durch die Transferstraße 1 in X-Richtung geförderten Werkstücke werden nacheinander von beiden Werkzeugmaschinen 2 bearbeitet.

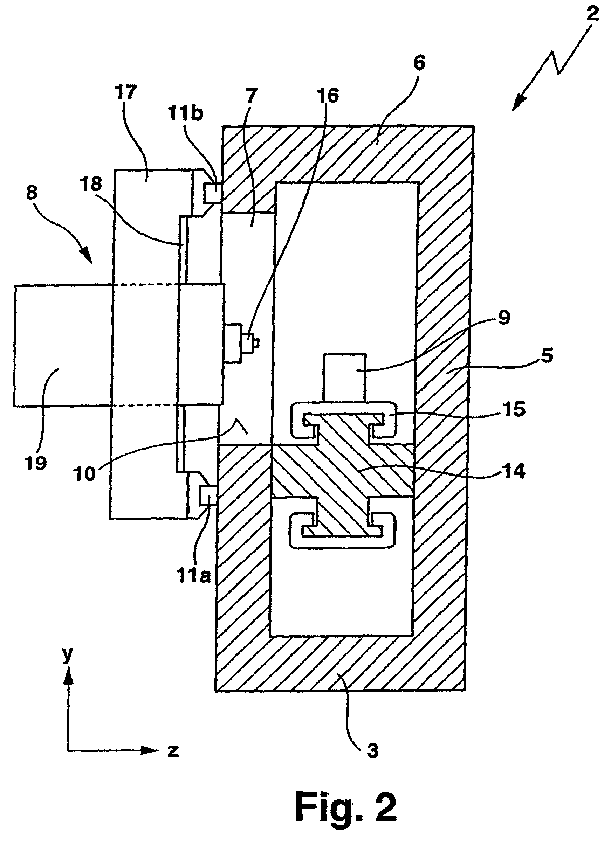

Jede Werkzeugmaschine 2 umfaßt jeweils ein rahmenförmiges Maschinengestell mit einem Bodenträger **3**, zwei Seitenwänden **4**, **5** und einem oberen Träger **6**. In der Seitenwand **4** ist eine Bearbeitungsöffnung **7** vorgesehen, durch die eine an der Seitenwand 4 befestigte Bearbeitungseinheit **8** (Fig. 2) ins Innere des Maschinengestells zur Bearbeitung eines Werkstücks **9** hindurchgreift. Die Bearbeitungsöffnung **7** ist seitlich durch zwei Stützen **10** der Seitenwand 4 definiert, durch die der obere Träger 6 auf dieser Seite abgestützt ist. Die Bearbeitungseinheiten sind jeweils außen an der Seitenwand 4 in zwei horizontalen bzw. vertikalen Führungen **11a, 11b** und **12** in X- bzw. Y-Richtung verschiebbar geführt. Für den Werkstückdurchgang (Transfer) weist jede Werkzeugmaschine 2 beidseitig jeweils eine in X-Richtung offene Öffnung **13** auf.

Wie in Fig. 2 gezeigt, ist im Inneren des Maschinengestells ein Werkstückträger **14** befestigt, an dem ein Werkstücktisch 15 oben zum Transport in X-Richtung und unten zum Rücktransport in entgegengesetzter Richtung verschiebbar gelagert ist. Die Bearbeitungseinheit **8** ist sowohl unterhalb der Bearbeitungsebene ihrer horizontal angeordneten Arbeitsspindel **16** in der unteren horizontalen Führung 11a als auch oberhalb der Bearbeitungsebene in der oberen horizontalen Führung 11b befestigt. In diesen Führungen 11a, 11b ist ein X-Schlitten **17** einer Schlitteneinheit geführt, mittels der die Arbeitsspindel **16** in X-, Y- und Z-Richtung verfahren werden kann. Am X-Schlitten **17** sind dazu vertikale Führungen **18** für einen Y-Schlitten **19** vorgesehen, in dem wiederum ein pinolenartiger Z-Schlitten (nicht dargestellt) mit der Arbeitsspindel 16 in Z-Richtung verfahrbar gelagert ist.

Die in Z-Richtung beim Relativverfahren von Arbeitsspindel 16 und Werkstück 9 und insbesondere die beim Bearbeiten des Werkstücks 9 mit dem in der Arbeitsspindel 16 eingespannten Werkzeug wirkenden Kräfte werden unten über die untere Führung 11a in die Seitenwand 4 und und oben über die obere Führung 11b und den oberen Träger 6 in die Seitenwand 5 eingeleitet und so vollständig vom Maschinengestell aufgenommen.

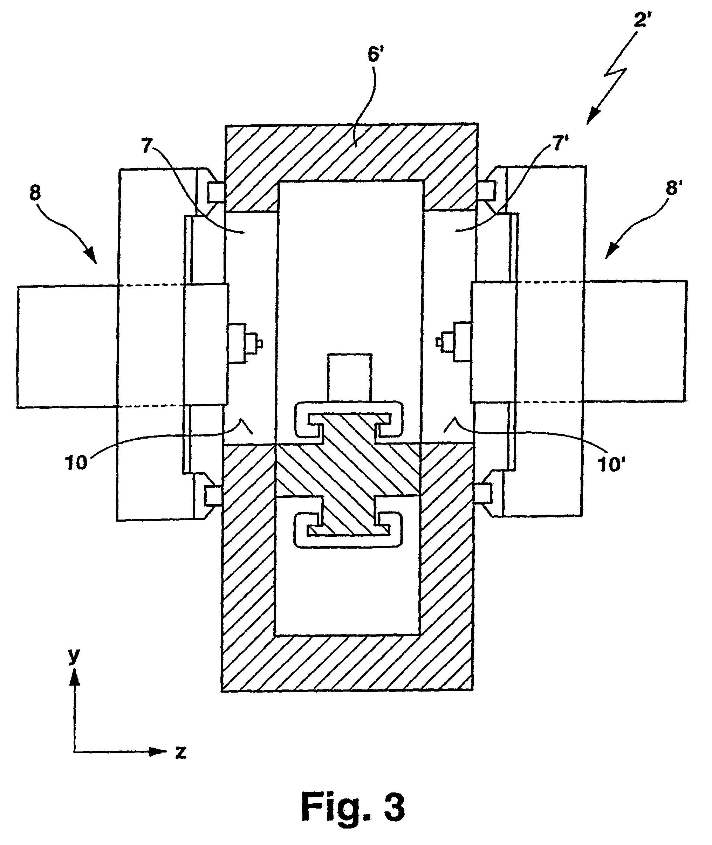

Bei der in Fig. 3 gezeigten Werkzeugmaschine **2'** ist der Bearbeitungseinheit 8 gegenüberliegend eine weitere identische Bearbeitungseinheit **8'** angeordnet, die ebenfalls durch eine Bearbeitungsöffnung **7'** ins Innere des Maschinengestells zur Bearbeitung des Werkstücks eingreift. Der obere Träger **6**', der über die Stützen 10, **10'** getragen ist, verbindet die beiden Bearbeitungseinheiten 8, 8' kraftmäßig miteinander, so daß diese auch oberhalb des Werkstücks relativ zu diesem und zueinander in Z-Richtung unverlagerbar befestigt sind.

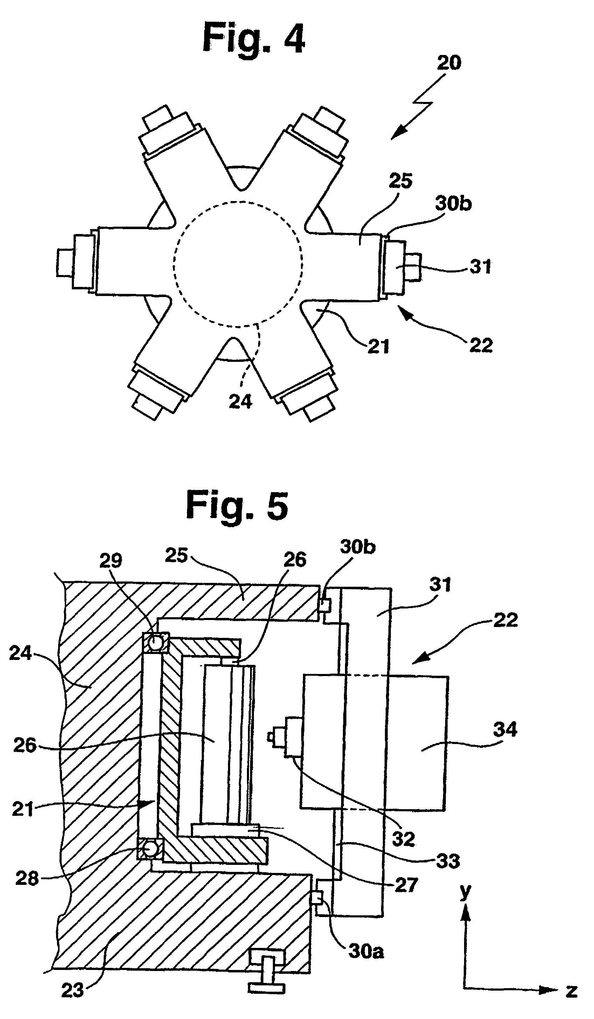

Die Fig. 4 zeigt eine Rundtisch-Werkzeugmaschine **20** mit sechs seitlich um den als Rundtisch ausgebildeten Werkstücktisch **21** herum angeordneten horizontalen Bearbeitungseinheiten **22.** Das Maschinengestell dieser Werkzeugmaschine 20 umfaßt einen sechsarmigen Bodenträger **23** (Fig. 5), einen über den Werkstücktisch 21 säulenartig hochstehenden, vertikalen Mittelträger **24** sowie sechs daran befestigte obere Träger **25**, die den Werkstücktisch 21 jeweils radial übergreifen. Diese sechs oberen Träger 25 können einstückig durch einen einzigen sechsarmigen Träger gebildet sein. Das zu bearbeitende Werkstück 26 ist an dem im Querschnitt etwa C-förmigen Werkstücktisch 21 oben bei **26** und unten bei **27** eingespannt, wobei der Werkstücktisch 21 in einem unteren und einem oberen Drehlager **28, 29** um den Mittelträger **24** herum drehbar gelagert ist.

Die Bearbeitungseinheiten 22 sind am Maschinengestell sowohl unterhalb des zu bearbeitenden Werkstücks 26 am Bodenträger 23 als auch oberhalb am oberen Träger 25 befestigt. Dazu sind für jede Bearbeitungseinheit 22 sowohl am Bodenträger 23 untere horizontale Führungen **30a** als auch am oberen Träger 25 obere horizontale Führungen **30b** vorgesehen, in denen die Bearbeitungseinheit 22 in X-Richtung verschiebbar geführt ist. In diesen Führungen 30a, 30b ist ein X-Schlitten **31** einer Schlitteneinheit geführt, mittels der eine horizontale Arbeitsspindel **32** in X-, Y- und Z-Richtung verfahren werden kann. Am X-Schlitten **31** sind dazu vertikale Führungen **33** für einen Y-Schlitten **34** vorgesehen, in dem wiederum ein pinolenartiger Z-Schlitten (nicht dargestellt) mit der Arbeitsspindel 32 in Z-Richtung verfahrbar gelagert ist.

Die in radialer Richtung (Z-Richtung) auf die Bearbeitungseinheit 22 beim Relativverfahren von Arbeitsspindel 32 und Werkstück 26 und insbesondere die beim Bearbeiten des Werkstücks .26 mit dem in der Arbeitsspindel 32 eingespannten Werkzeug wirkenden Kräfte werden über die beiden Führungen 30a, 30b in den Bodenträger 23 bzw. über den oberen Träger 25 in den Mittelträger 24 eingeleitet und damit vollständig vom Maschinengestell aufgenommen. Die auf das Werkstück 26 wirkenden Kräfte werden unten über die untere Befestigung 27 und das untere Drehlager 28 sowie oben über die obere Befestigung 26 und das obere Drehlager 29 auf den Mittelträger 24 und damit ebenfalls auf das Maschinengestell abgeleitet.

## Patentansprüche

1. Werkzeugmaschine (2; 2'; 20) zur insbesondere spanenden Bearbeitung von Werkstücken (9; 26), mit einem Maschinengestell, einem am Maschinengestell gelagerten Werkstücktisch (15; 21) und einer horizontal angeordneten Bearbeitungseinheit (8; 8'; 22), die mit ihrer unteren Seite am Maschinengestell befestigt ist,
**dadurch gekennzeichnet,**
**daß** die Bearbeitungseinheit (8; 8'; 22) mit ihrer oberen Seite an einem den Werkstücktisch (15; 21) über- . greifenden Träger (6; 6'; 25) des Maschinengestells befestigt ist.

2. Werkzeugmaschine nach Anspruch 1, **dadurch gekennzeichnet, daß** der Träger (6; 6'; 25) den Werkstücktisch (15; 21) von der der Bearbeitungseinheit (8; 8'; 22) gegenüberliegenden Seite übergreift.

3. Werkzeugmaschine nach Anspruch 1 oder 2, **dadurch gekennzeichnet, daß** die Bearbeitungseinheit (8; 8'; 22) am Maschinengestell in mindestens einer Führung (11a, 11b; 12; 30a, 30b) verschiebbar geführt ist, welche am Träger (6; 6'; 25) befestigt ist.

4. Werkzeugmaschine nach Anspruch 3, **dadurch gekennzeichnet, daß** die mindestens eine Führung (11a, 11b; 30a, 30b) am Träger (6; 6'; 25) etwa horizontal verläuft.

5. Werkzeugmaschine nach einem der vorhergehenden Ansprüche, **dadurch gekennzeichnet, daß** der Träger (6; 6'; 25) auf der Seite der Bearbeitungseinheit (8; 8'; 22) am Maschinengestell abgestützt ist.

6. Werkzeugmaschine nach Anspruch 5, **dadurch gekennzeichnet, daß** der Träger (6; 6') mittels mindestens einer seitlich eines Bearbeitungsfensters (7; 7') der Bearbeitungseinheit (8; 8') vorgesehenen Stütze (10; 10') am Maschinengestell abgestützt ist.

7. Werkzeugmaschine nach Anspruch 6, **dadurch gekennzeichnet, daß** die mindestens eine Führung (12) etwa vertikal an der Stütze (10; 10') vorgesehen ist.

8. Werkzeugmaschine nach einem der vorhergehenden Ansprüche, **dadurch gekennzeichnet, daß** der Werkstücktisch (21) drehbar um einen über den Werkstücktisch (21) hochstehenden Mittelträger (24) des Maschinengestells herum gelagert ist und daß der der den Werkstücktisch (21) etwa radial übergreifende Träger (25) einer Bearbeitungseinheit (22) am Mittelträger (24) befestigt ist.

9. Werkzeugmaschine nach Anspruch 8, dadurch daß der Werkstücktisch (21) jeweils über ein unterhalb und oberhalb des zu bearbeitenden Werkstücks (26) vorgesehenes Drehlager (28, 29) am Mittelträger (24) befestigt ist.

10. Werkzeugmaschine nach Anspruch 8 oder 9, **dadurch gekennzeichnet, daß** an dem hochstehenden Mittelträger (24) mehrere in dessen Umfangsrichtung versetzt angeordnete übergreifende Träger (25) angeordnet sind.

11. Werkzeugmaschine nach einem der Ansprüche 1 bis 7, **dadurch gekennzeichnet, daß** am Träger (6; 6') auf gegenüberliegenden Seiten jeweils eine Bearbeitungseinheit (8; 8') vorgesehen ist.

## Claims

1. Machine tool (2;2';20), in particular for cutting processing of workpieces (9;26) comprising a machine frame, a workpiece table (15;21) borne on the machine frame and an approximately horizontally disposed processing unit (8;8';22) mounted to the machine frame, **characterized in that** the processing unit (8;8';22) is also mounted to a support (6;6';25) of the machine frame overlapping the workpiece table (15;21).

2. Machine tool according to claim 1, **characterized in that** the support (6;6';25) overlaps the workpiece table (15;21) from the side opposing the processing unit (8;8';22).

3. Machine tool according to claim 1 or 2, **characterized in that** the processing unit (8;8';22) is displaceably guided on the machine frame in at least one guide (11a,11b;12;30a,30b) which is mounted to the support (6;6';25).

4. Machine tool according to claim 3, **characterized in that** the at least one guide (11a,11b;30a,30b) extends approximately horizontally on the support (6;6';25).

5. Machine tool according to any one of the preceding claims, **characterized in that** the support (6;6';25) is supported on the machine frame on the side of the processing unit (8;8';22).

6. Machine tool according to claim 5, **characterized in that** the support (6;6') is supported on the machine frame through at least one support (10;10') provided on the side of a processing window (7;7') of the processing unit (8;8').

7. Machine tool according to claim 6, **characterized in that** the at least one guide (12) is provided approximately vertically on the support (10;10').

8. Machine tool according to any one of the preceding claims, **characterized in that** the workpiece table (21) is disposed to be pivotable about a central support (24) of the machine frame projecting upwards and beyond the workpiece table (21), and **in that** the support (25) of a processing unit (22) which overlaps the workpiece table (21) approximately radially, is mounted to the central support (24).

9. Machine tool according to claim 8, **characterized in that** the workpiece table (21) is mounted to the central support (24) via a pivot bearing (28,29) provided below and above the workpiece (26) to be processed.

10. Machine tool according to claim 8 or 9, **characterized in that** several overlapping supports (25) are disposed on the projecting central support (24) which are offset in its circumferential direction.

11. Machine tool according to any one of the claims 1 through 7, **characterized in that** one processing unit (8;8') each is provided on opposing sides of the support (6;6').

## Revendications

1. Machine-outil (2 ; 2' ; 20) pour l'usinage de pièces à oeuvrer (9 ; 26) en particulier par enlèvement de matière, comportant un bâti de machine, une table à pièces (15 ; 21) montée sur le bâti de machine et une unité d'usinage (8 ; 8' ; 22) agencée horizontalement qui est fixée par sa face inférieure sur le bâti de machine, **caractérisée en ce que** l'unité d'usinage (8 ; 8' ; 22) est fixée par sa face supérieure sur un support (6 ; 6' ; 25) du bâti de machine, support qui coiffe la table à pièces (15 ; 21).

2. Machine-outil selon la revendication 1, **caractérisée en ce que** le support (6 ; 6' ; 25) coiffe la table à pièces (15 ; 21) depuis le côté opposé à l'unité d'usinage (8 ; 8' ; 22).

3. Machine-outil selon l'une ou l'autre des revendications 1 et 2, **caractérisée en ce que** l'unité d'usinage (8 ; 8' ; 22) est guidée mobile en translation sur le bâti de machine dans au moins un guidage (11a, 11b ; 12 ; 30a, 30b) qui est fixé sur le support (6 ; 6' ; 25).

4. Machine-outil selon la revendication 3, **caractérisée en ce que** ledit au moins un guidage (11a, 11b ; 30a, 30b) s'étend approximativement horizontalement sur le support (6 ; 6' ; 25).

5. Machine-outil selon l'une des revendications précédentes, **caractérisée en ce que** le support (6 ; 6' ; 25) est soutenu sur le bâti de machine sur le côté de l'unité d'usinage (8 ; 8' ; 22).

6. Machine-outil selon la revendication 5, **caractérisée en ce que** le support (6 ; 6') est soutenu sur le bâti de machine au moyen d'au moins un élément de soutien (10 ; 10') prévu latéralement à côté d'une fenêtre d'usinage (7 ; 7') de l'unité d'usinage (8 ; 8').

7. Machine-outil selon la revendication 6, **caractérisée en ce que** ledit au moins un guidage (12) est prévu approximativement verticalement sur l'élément de soutien (10 ; 10').

8. Machine-outil selon l'une des revendications précédentes, **caractérisée en ce que** la table à pièces (21) est montée mobile en rotation autour d'un support central (24), dressé au-dessus de la table à pièces (21), du bâti de machine et **en ce que** le support (25) d'une unité d'usinage (22), lequel coiffe approximativement radialement la table à pièces (21) est fixé sur le support central (24).

9. Machine-outil selon la revendication 8, **caractérisée en ce que** la table à pièces (21) est fixée sur le support central (24) via un palier rotatif respectif (28, 29) fixé au-dessous et au-dessus de la pièce à oeuvrer (26).

10. Machine-outil selon l'une ou l'autre des revendications 8 et 9, **caractérisée en ce qu'**il est prévu sur le support central (24) dressé plusieurs supports de coiffe (25) agencés en décalage dans sa direction périphérique.

11. Machine-outil selon l'une des revendications 1 à 7, **caractérisée en ce que** des unités d'usinage respectives (8 ; 8') sont prévues sur le support (6 ; 6') sur des côtés opposés.
